(19) Europäisches Patentamt
European Patent Office
Office européen des brevets

(11) **EP 4 769 576 A1**

(12) **EUROPEAN PATENT APPLICATION**
published in accordance with Art. 153(4) EPC

(43) Date of publication:
01.07.2026 Bulletin 2026/27

(21) Application number: 25852317.4

(22) Date of filing: 08.08.2025

(51) International Patent Classification (IPC):
$H01M\ 4/62^{(2006.01)}$    $H01M\ 4/525^{(2010.01)}$
$H01M\ 4/505^{(2010.01)}$    $H01M\ 4/1391^{(2010.01)}$
$H01M\ 10/052^{(2010.01)}$

(52) Cooperative Patent Classification (CPC):
H01M 4/1391; H01M 4/505; H01M 4/525;
H01M 4/62; H01M 10/052; Y02E 60/10

(86) International application number:
PCT/KR2025/011990

(87) International publication number:
WO 2026/035093 (12.02.2026 Gazette 2026/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 09.08.2024 KR 20240107186

(71) Applicant: LG Energy Solution, Ltd.
Seoul 07335 (KR)

(72) Inventors:
• YANG, Jeong Min
Daejeon 34122 (KR)

• PARK, Yo Sub
Daejeon 34122 (KR)
• KWAK, Sang Min
Daejeon 34122 (KR)
• HAN, Seung Hee
Daejeon 34122 (KR)
• LEE, Nam Jeong
Daejeon 34122 (KR)

(74) Representative: Hoffmann Eitle
Patent- und Rechtsanwälte PartmbB
Arabellastraße 30
81925 München (DE)

(54) **ELECTRODE MIXTURE COMPOSITION, METHOD FOR MANUFACTURING DRY ELECTRODE USING SAME, AND SECONDARY BATTERY COMPRISING DRY ELECTRODE MANUFACTURED THEREFROM**

(57) The present specification discloses a technique relating to an electrode material mixture composition, wherein the electrode material mixture composition is characterized by including a binder mixture including a large-crystal binder having a crystal size of 50 nm or more and a small-crystal binder having a crystal size of less than 50 nm; and an electrode active material. The electrode material mixture composition may improve mechanical properties of a powder-sheeting film by utilizing different degrees of fibrillization by using a binder mixture in which binders having different crystal sizes are mixed, may improve processability of a calendering process, and thus may provide a secondary battery having excellent resistance characteristics.

EP 4 769 576 A1

## Description

### TECHNICAL FIELD

The present specification relates to an electrode material mixture composition, a method of preparing a dry electrode using the same, and a secondary battery including a dry electrode prepared therefrom.

### BACKGROUND ART

Secondary batteries have been used not only in small products such as digital cameras, P-DVDs, MP3Ps, mobile phones, PDAs, portable game devices, power tools, and E-bikes, but also in large products requiring high output, such as electric vehicles and hybrid vehicles, and a power storage device and a power storage device for backup which store surplus generated power or renewable energy.

Typically, a secondary battery is prepared by a method in which, after an electrode active material layer is formed by coating a positive electrode collector and a negative electrode collector with an electrode active material slurry, a positive electrode and a negative electrode are prepared through drying and rolling processes, an electrode assembly having a predetermined shape is formed by stacking the positive electrode and the negative electrode on both sides of a separator and is then accommodated in a battery case, and the battery case is sealed after an electrolyte is injected.

During the process of drying the electrode active material slurry, defects, such as pinholes or cracks, may occur in the electrode active material layer formed on the current collector as a solvent contained in the slurry evaporates. Also, since the inside and outside of the electrode active material slurry are not uniformly dried during the drying process, there is a concern that quality of the electrode is degraded due to a powder floating phenomenon caused by a difference in evaporation rate of the solvent, in which particles in a region dried first move upward to form a gap with a region dried relatively later.

To solve the above problem, drying devices capable of controlling the evaporation rate of the solvent are being considered so that the inside and outside of the electrode active material slurry may be uniformly dried, but since these drying devices are very expensive and require considerable cost and time to operate, they have disadvantages in terms of manufacturability.

On the other hand, the solvent contained in the conventional electrode active material slurry is N-methyl-2-pyrrolidone (NMP), wherein, since it has a high boiling point, high thermal energy and a very long drying furnace are required to dry it, and thus, it is very disadvantageous for mass production. Also, since the N-methyl-2-pyrrolidone (NMP) is a toxic substance and harmful to living organisms, it has a disadvantage of not being environmentally friendly.

Accordingly, research on a dry electrode, in which an electrode is prepared without using a solvent, has been actively conducted recently. The dry electrode is generally prepared by laminating a free-standing type electrode material mixture film, which includes an electrode active material, a binder, or a conductive agent and is prepared in a form of a sheet, on a current collector. The electrode material mixture film is prepared by a process in which, first, an electrode active material, a carbon material as a conductive agent, and a fibrillizable binder are mixed together using a blender or the like, the binder is fibrillized by applying a shear force through a process such as jet-milling or kneading, and a free-standing film is then prepared by calendering the obtained mixture into a film shape.

In order to secure appearance and mechanical properties of the film for a dry electrode, it is necessary to precisely control conditions of the mixing, kneading, and calendering processes to uniformly disperse and fibrillize the binder into the active material. However, there is a problem in that it is not easy to guarantee physical properties of the electrode because optimized process conditions, such as kneading time, are all different depending on a type of the binder and the mechanical properties of the film vary greatly accordingly.

Thus, there is a need for research and development to optimize the process conditions depending on the type of the binder and to determine which binder is effective in improving the appearance and mechanical properties of the film.

### DISCLOSURE OF THE INVENTION

### TECHNICAL PROBLEM

An aspect of the present specification provides an electrode material mixture composition capable of improving mechanical properties of a powder-sheeting film by utilizing different degrees of fibrillization by using a binder mixture in which binders having different crystal sizes are mixed.

Also, another aspect of the present specification provides a method of preparing a dry electrode which may significantly improve processability of a calendering process through the improvement of the mechanical properties of the powder-sheeting film by inducing coexistence of a hard portion and a soft portion of a binder matrix in the powder-sheeting film with appropriate uniformity by utilizing the fact that the binders having different crystal sizes have different degrees of fibrillization.

Furthermore, another aspect of the present specification provides a secondary battery having excellent durability, excellent lithium ion mobility due to excellent electrolyte solution wettability caused by the presence of both hard portion and soft portion in the binder matrix within the electrode, and improved resistance characteristics by using a dry electrode having excellent appearance characteristics and excellent mechanical properties which is prepared by the above method of preparing a dry electrode.

## TECHNICAL SOLUTION

[1] In an aspect of the present specification, provided is an electrode material mixture composition including: a binder mixture including a large-crystal binder having a crystal size of 50 nm or more and a small-crystal binder having a crystal size of less than 50 nm; and an electrode active material.

[2] The electrode material mixture composition of [1] above, wherein a weight fraction of the large-crystal binder in the binder mixture is smaller than a weight fraction of the small-crystal binder.

[3] The electrode material mixture composition of [1] and/or [2] above, wherein the large-crystal binder has a crystal size of 50 nm to 100 nm, and the small-crystal binder has a crystal size of 10 nm to 49 nm.

[4] The electrode material mixture composition of at least one of [1] to [3] above, wherein based on 100 parts by weight of the binder mixture, 5 parts by weight to 45 parts by weight of the large-crystal binder and 55 parts by weight to 95 parts by weight of the small-crystal binder are included.

[5] The electrode material mixture composition of at least one of [1] to [4] above, wherein the binder mixture has an R defined by Equation 1 of 1.27 or less.

$$[\text{Equation 1}]$$

$$R = [C_L \times (1+W_L)] / [(C_S \times (1+W_S)]$$

In Equation 1, $C_L$ and $C_S$ are values of the crystal sizes of the large-crystal binder and the small-crystal binder, respectively, in units of nm, and $W_L$ and $W_S$ are weight fractions of the large-crystal binder and the small-crystal binder, respectively, based on a total weight of the binder mixture.

[6] The electrode material mixture composition of at least one of [1] to [5] above, wherein the electrode active material includes a lithium transition metal compound containing at least one selected from the group consisting of nickel (Ni), cobalt (Co), manganese (Mn), and iron (Fe).

[7] The electrode material mixture composition of at least one of [1] to [6] above, wherein the binder includes polytetrafluoroethylene (PTFE).

[8] In another aspect of the present specification, provided is a method of preparing a dry electrode which includes the steps of: preparing an electrode material mixture composition by mixing an electrode active material, a conductive agent, and a binder mixture including a large-crystal binder having a crystal size of 50 nm or more in the binder and a small-crystal binder having a crystal size of less than 50 nm in the binder (S1); obtaining a mixed aggregate by kneading the electrode material mixture composition while applying a shear force (S2); obtaining powder for an electrode by grinding the mixed aggregate (S3); and preparing an electrode material mixture film by roll-pressing the powder for an electrode to form a sheet (S4).

[9] The method of [8] above, wherein T defined by Equation 2 is 5.7 minutes or less.

$$[\text{Equation 2}]$$

$$T = \{[C_L \times (1+W_L)] / [(C_S \times (1+W_S)]\} / t_K$$

In Equation 1, $C_L$ and $C_S$ are values of the crystal sizes of the large-crystal binder and the small-crystal binder, respectively, in units of nm, $W_L$ and $W_S$ are weight fractions of the large-crystal binder and the small-crystal binder, respectively, based on a total weight of the binder mixture, and $t_K$ is kneading time, a unitless value expressed in minutes.

[10] The method of [8] and/or [9] above, wherein $t_K$ is in a range of 15 minutes to 25 minutes.

[11] The method of at least one of [8] to [10] above, wherein temperature of a roll in step S4 is in a range of 60°C to 150°C.

[12] The method of at least one of [8] to [11] above, wherein step S4 includes the steps of: obtaining a powder-sheeting film by pre-sheeting the powder for an electrode (S4a); and preparing an electrode material mixture film by sheeting the powder-sheeting film two or more times (S4b).

[13] In another aspect of the present specification, provided is a secondary battery including a dry electrode that is prepared by the method of preparing a dry electrode of at least one of [8] to [12] above.

## ADVANTAGEOUS EFFECTS

An electrode material mixture composition according to the present specification may improve mechanical properties of a powder-sheeting film by utilizing different degrees of fibrillization by using a binder mixture in which binders having different crystal sizes are mixed.

Also, a method of preparing a dry electrode according to the present specification may significantly improve processability of a calendering process through the improvement of the mechanical properties of the powder-sheeting film by inducing coexistence of a hard portion and a soft portion of a binder matrix in the powder-sheeting film with appropriate uniformity by utilizing the fact that the binders having different crystal sizes have different degrees of fibrillization.

Furthermore, a secondary battery according to the present specification may have excellent durability, excellent lithium ion mobility due to excellent electrolyte solution wettability caused by the presence of both hard portion and soft portion in the binder matrix within the electrode, and improved resistance characteristics by using a dry electrode having excellent appearance characteristics and excellent mechanical properties which is prepared by the above method of preparing a dry electrode.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In this specification, a "material mixture" means a mixture including an electrode active material and a binder (in some cases, also including a conductive agent), which is physically mixed to form a uniform dispersion phase, wherein it may be a mixture of powders, as a product of a mixing process according to this specification, and may be one in which substantially no solvent is involved. Herein, the fact that substantially no solvent is involved means that no solvent or only a trace amount of solvent is added when mixing the material mixture.

In this specification, a "mixed aggregate" refers to one in which the mixture of powders is converted into a dough-like aggregate by being bonded or connected to each other while the binder is fibrillized by applying a shear force to the material mixture, wherein it, as a product of a kneading process according to this specification, may have a solid content of 100%.

In this specification, "powder for an electrode" may mean a material in a state in which the mixed aggregate is ground to form powder by reducing a size of particles.

In this specification, the "electrode material mixture film" may denote one which is prepared in a form of a free standing type single sheet using an "electrode material mixture" including the electrode active material, the conductive agent, and the binder without a solvent involved. The expression 'free standing type' in this specification means that it may maintain its form independently without relying on other members and may be moved or handled on its own. The electrode material mixture film may be formed by pressing the powder for an electrode as described later. For example, the powder for an electrode may be integrated by pressing to form a layered structure. The powder for an electrode is an electrode material in a form of powder which includes the electrode active material and the binder, wherein, for example, it may be obtained by grinding an aggregate containing the electrode active material and the binder as described below.

In this specification, a "powder-sheeting film" means a film after a sheet form is formed through a powder-sheeting process in which the powder for an electrode first passes through a rolling roll in a roll-to-roll process and before passing through a last rolling roll in the above process, wherein it may be a free standing type sheet, but may be a sheet having weak retention. Herein, the 'powder-sheeting' means that the powder for an electrode is prepared in the form of a free standing type sheet by the rolling roll of a calendering process, and 'sheeting' may mean a calendering process that is performed in a process of preparing the electrode material mixture film from the powder-sheeting film.

In this specification, the electrode material mixture composition, the method of preparing a dry electrode, and the secondary battery each include at least one of technical configurations described below, and may include any combination between technically possible configurations among the technical configurations below.

**Electrode Material Mixture Composition**

In an aspect, an electrode material mixture composition is characterized by including a binder mixture including a large-crystal binder having a crystal size of 50 nm or more and a small-crystal binder having a crystal size of less than 50 nm; and an electrode active material.

The crystal size of the binder may be measured using X-ray diffraction (XRD) analysis. Specifically, the crystal size of the binder may be measured by analyzing XRD data obtained through X-ray diffraction analysis using a Rietveld refinement method. In this case, the X-ray diffraction analysis is performed using a Bruker D8 Endeavor (radiation source: Cu-K$\alpha$, A=1.54 Å, 40 kV, 40 mA) equipped with a LynxEye XE-T-position sensitive detector (4.1 slit), wherein a sample is placed in a groove of a holder for general powder, a surface of the sample is leveled using a slide glass, the sample is filled such that a sample height matches an edge of the holder, and the measurement is then conducted under conditions of a fixed divergence slit (FDS) of 0.3°, in a 2θ range of 10° to 80° at intervals of 0.01° with 0.25 seconds per step. Phase analysis is performed by identifying phases present in the sample through comparison with a database in a Bruker TOPAS program, and entire peaks in the measurement range are used during fitting. A peak shape is fitted by using crystal system and lattice constants of the material and by using only Lorentzian contribution as a first principle (FP) among peak types available in the TOPAS.

Mechanical properties and appearance characteristics of a dry electrode and performance of the electrode and a secondary battery are affected by various factors while the dry electrode goes through various processes from a mixing process for forming a material mixture composition to a kneading process for forming a mixed aggregate by kneading the material mixture composition, a process for grinding the mixed aggregate after the kneading, and a process for sheeting powder for an electrode in which the mixed aggregate has been ground. Particularly, in the kneading process in which a binder is fibrillized, since a degree of fibrillization of the binder may vary even with small changes in process conditions and may also vary depending on a crystal size of the binder and the process conditions applied to the kneading process also significantly vary depending on the crystal size, the process may be considered to be highly difficult.

Accordingly, in the present specification, in applying general kneading process conditions, it is intended to provide an electrode material mixture composition having excellent mechanical properties in which the degree of fibrillization is excellent as independently as possible of the kneading process conditions and a hard binder and a soft binder coexist and are appropriately harmonized in a binder matrix of the dry electrode.

In an aspect, the electrode material mixture composition includes a binder mixture including binders having different crystal sizes, and is specifically characterized by including a large-crystal binder having a crystal size of 50 nm or more and a small-crystal binder having a crystal size of less than 50 nm.

It has not been clearly established what form an internal structure and a degree of fibrillization of the binder matrix in the dry electrode should take in order to exhibit the best performance. However, the present invention aims to disclose that, rather than having a uniform degree of fibrillization of the binder within an electrode material mixture film without distinction between hard/soft portions, it is preferable to have a shape in which binders with different degrees of fibrillization form specific regions and these regions are distributed with appropriate uniformity.

That is, it may be confirmed that the degree of fibrillization is different depending on the crystal size of the binder in the binder matrix, the large-crystal binder may provide strength by imparting hard properties to the film depending on the degree of fibrillization, and the small-crystal binder may provide flexibility by imparting soft properties to the film, and this may be achieved by mixing the binders having different crystal sizes.

In an aspect, the binder mixture in the electrode material mixture composition includes a large-crystal binder having a crystal size of 50 nm or more and a small-crystal binder having a crystal size of less than 50 nm. In a case in which the crystal size of the large-crystal binder is smaller than 50 nm, that is, in a case in which there is no binder having a crystal size of 50 nm or more among the binders being mixed, since the degree of fibrillization tends to become indistinguishable and excessively fibrillized through kneading, durability may be reduced due to low tensile strength. Also, in a case in which all the crystal sizes of the mixed binders are 50 nm or more, processability may be reduced due to long kneading time required for an appropriate level of fibrillization and flexural strength of the film may be low to cause a problem of breakage when the film is wound on a calendering roll, and furthermore, mechanical properties of the electrode material mixture film may be poor.

Preferably, the large-crystal binder may have a crystal size of 50 nm to 100 nm, and, more preferably, the crystal size of the large-crystal binder may be 100 nm or less, 90 nm or less, 80 nm or less, or 75 nm or less, and may also be 50 nm or more. The small-crystal binder may have a crystal size of 10 nm to 49 nm, more preferably 20 nm or more, 25 nm or more, or 30 nm or more, and 45 nm or less, or 40 nm or less.

In an aspect, a weight fraction of the large-crystal binder in the binder mixture may be smaller than a weight fraction of the small-crystal binder. That is, by utilizing the fact that a fibrillization rate of the small-crystal binder is fast, since it is possible to secure flexibility, which may be insufficient due to slow fibrillization of the large-crystal binder during simultaneous fibrillization of the large-crystal binder and the small-crystalline binder, by including an excessive amount of the small-crystal binder, and to secure stiffness even if the large-crystal binder is not completely fibrillized, simultaneous improvement of tensile strength and elongation, as mechanical properties, may be expected.

Preferably, based on 100 parts by weight of the binder mixture, 5 to 45 parts by weight of the large-crystal binder and 55 to 95 parts by weight of the small-crystal binder may be included. More preferably, the weight fraction of the large-crystal binder may be 7 parts by weight or more, or 10 parts by weight or more, and may also be 40 parts by weight or less, 35 parts by weight or less, or 30 parts by weight or less. In addition, the weight fraction of the small-crystal binder may be the remainder of 100 parts by weight of the binder mixture. In a case in which the large-crystal binder and the small-crystal binder are mixed within the above range, an effect of simultaneously improving the tensile strength and the elongation may be further enhanced.

In an aspect, the binder mixture may have an R defined by Equation 1 below of 1.27 or less.

$$[Equation\ 1]$$

$$R = [C_L \times (1+W_L)] / [(C_S \times (1+W_S)]$$

In Equation 1, $C_L$ and $C_S$ are values of the crystal sizes of the large-crystal binder and the small-crystal binder, respectively, in units of nm, and $W_L$ and $W_S$ are the weight fractions of the large-crystal binder and the small-crystal binder, respectively, based on a total weight of the binder mixture.

R defined by Equation 1 may be considered as a factor that allows prediction of the degree of fibrillization based on how the weight fractions according to the crystal size influence the binder mixture.

Preferably, the R value may be 1.25 or less, 1.23 or less, 1.22 or less, 1.21 or less, 1.20 or less, 1.18 or less, or 1.17 or less, and in a case in which the R value is within the above range, since a mixing ratio according to the crystal size may be optimized, an improvement in the mechanical properties of the film, an improvement in processability of the calendering process, and furthermore, an improvement in the performance of the secondary battery may be expected.

In an aspect, the binder is not limited to any particular binder as long as it may form a matrix within the electrode material mixture film, and for example, a binder capable of fibrillization may be used. The fibrillization refers to a treatment of finely dividing a polymer. For example, the fibrillization may be performed using a mechanical shear force or the like, and surfaces of the polymer fibers thus fibrillized are loose to generate a large number of fine fibers (fibrils). The fibrillizable binder may preferably include at least one selected from the group consisting of polytetrafluoroethylene (PTFE) and polyolefin, may more preferably include polytetrafluoroethylene (PTFE), and may still more preferably be polytetrafluoroethylene (PTFE). Specifically, the polytetrafluoroethylene (PTFE) may be included in an amount of 60 wt% or more based on a total weight of the binder. In this case, the binder may additionally include at least one of PEO (polyethylene oxide), PVdF (polyvinylidene fluoride), PVdF-HFP (polyvinylidene fluoride-cohexafluoropropylene), and a polyolefin-based binder.

The binder mixture may be included in an amount of 0.1 wt% to 10.0 wt% based on a total weight of the electrode material mixture composition, may preferably be included in an amount of 0.2 wt% or more, 0.3 wt% or more, 0.5 wt% or more, 0.7 wt% or more, or 1.0 wt% or more, and may also be included in an amount of 9.0 wt% or less, 8.0 wt% or less, 7.0 wt% or less, or 5.0 wt% or less. In a case in which the binder mixture is included within the above range, problems, such as acting as a resistance or an insufficient degree of fibrillization to be prepared in the form of a free standing type sheet, may be avoided.

In an aspect, the electrode material mixture composition includes an electrode active material in addition to the binder, and may further include a conductive agent in some cases.

There is no particular limitation on the electrode active material as long as it is a commonly used electrode active material, and, for example, the electrode active material may be a positive electrode active material or a negative electrode active material.

The positive electrode active material is a compound capable of reversibly intercalating and deintercalating lithium, wherein the positive electrode active material may include a lithium transition metal compound containing at least one selected from the group consisting of nickel (Ni), cobalt (Co), manganese (Mn), and iron (Fe).

Specifically, the positive electrode active material may include a lithium metal oxide including lithium and at least one metal such as cobalt, manganese, nickel, or aluminum. More specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), lithium-nickel-cobalt-based oxide (e.g., $LiNi_{1-Y1}Co_{Y1}O_2$ (where $0<Y1<1$), etc.), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$), etc.), lithium-nickel-manganese-cobalt-based oxide (e.g., $Li(Ni_pCo_qMn_r)O_2$ (where $0<p<1$, $0<q<1$, $0<r<1$, and $p+q+r=1$) or $Li(Ni_{p1}Co_{q1}Mn_{r1})O_4$ (where $0<p1<2$, $0<q1<2$, $0<r1<2$, and $p1+q1+r1=2$), etc.), lithium-nickel-cobalt-transition metal (M) oxide (e.g., $Li(Ni_{p2}Co_{q2}Mn_{r2}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and s2 are atomic fractions of each independent elements, wherein $0<p2<1$, $0<q2<1$, $0<r2<1$, $0<s2<1$, and $p2+q2+r2+s2=1$), etc.), or lithium iron phosphate (e.g., $Li_{1+a}Fe_{1-x}M_x(PO_{4-b})X_b$ (where M is at least one selected from Al, Mg, and Ti, and X is at least one selected from fluorine (F), sulfur (S), and nitrogen (N), wherein $-0.5 \leq a \leq 0.5$, $0 \leq x \leq 0.5$, and $0 \leq b \leq 0.1$), and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}Mn_{1/3}CO_{1/3})O_2$, $Li(Ni_{0.6}Mn_{0.2}Co_{0.2})O_2$, $Li(Ni_{0.3}Mn_{0.3}CO_{0.2})O_2$, $Li(Ni_{0.7}Mn_{0.15}Co_{0.15})O_2$, and $Li(Ni_{0.8}Mn_{0.1}Co_{0.1})O_2$, etc.), lithium nickel cobalt aluminum oxide (e.g., $Li(Ni_{0.8}Co_{0.15}Al_{0.05})O_2$, etc.), lithium nickel manganese cobalt aluminum oxide (e.g., $Li(Ni_{0.86}Co_{0.05}Mn_{0.07}Al_{0.02})O_2$), or lithium iron phosphate (e.g., $LiFePO_4$), and any one thereof or a mixture of two or more thereof may be used.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), Ni, sodium (Na), potassium (K), rubidium (Rb), cesium (Cs), francium (Fr), beryllium (Be), Mg, calcium (Ca), strontium (Sr), silicon (Si), antimony (Sb), lead (Pb), indium (In), zinc (Zn), barium (Ba), radium (Ra), germanium (Ge), Al, and tin (Sn) or an alloy of lithium and the metal may be used.

One selected from the group consisting of $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $Li_xFe_2O_3$ $(0 \leq x \leq 1)$, $Li_xWO_2$ $(0 \leq x \leq 1)$, and $Sn_xMe_{1-x}Me'_yO_z$ (Me: Mn, Fe, lead (Pb), or Ge; Me': Al, boron (B), phosphorus (P), Si, Groups I, II and III elements of the periodic table, or halogen; $0<x \leq 1$; $1 \leq y \leq 3$; $1 \leq z \leq 8$) may be used as the metal composite oxide.

The material, which may be doped and undoped with lithium, may include Si, $SiO_x$ $(0<x \leq 2)$, a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), S, selenium (Se), tellurium (Te), polonium (Po), and a combination thereof.

The transition metal oxide may include lithium-containing titanium composite oxide (LTO), vanadium oxide, and lithium vanadium oxide.

The electrode active material may be included in an amount of 80 wt% to 99 wt% based on the total weight of the electrode material mixture composition, may preferably be included in an amount of 85 wt% or more, 88 wt% or more, 90 wt% or more, 92 wt% or more, 93 wt% or more, or 95 wt% or more, and may also be included in an amount of 98.5 wt% or less, 98 wt% or less, or 97.5 wt% or less. In a case in which the electrode active material is included within the above range, it may be desirable in terms of both increasing capacity and energy density of the electrode and optimizing functions of the conductive agent and the binder as auxiliary materials.

The conductive agent is a component for further improving conductivity of the electrode active material, wherein the conductive agent is not particularly limited as long as it has conductivity without causing chemical changes in the battery, and, for example, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used. Specifically, the conductive agent may include at least one selected from the group consisting of activated carbon, graphite, carbon black, and carbon nanotubes (CNT) for uniform mixing of the conductive agent and improvement of the conductivity.

The conductive agent may be included in an amount of 0.1 wt% to 10.0 wt% based on the total weight of the electrode material mixture composition. Preferably, the conductive agent may be included in an amount of 0.2 wt% or more, 0.3 wt% or more, 0.5 wt% or more, or 0.7 wt% or more, and may also be included in an amount of 8.0 wt% or less, 6.0 wt% or less, or 5.0 wt% or less. Although an increased amount of the conductive agent may be advantageous for forming a conductive path, the capacity may be reduced due to a relative decrease in the amount of the active material, and it is not easy to control the input amount due to dispersion issues, but since an effect of forming the conductive path may be maximized by optimizing dispersibility within the above range, it may be desirable to use the conductive agent within the above range.

The electrode material mixture film may have a porosity of 20 vol% to 50 vol%, specifically 20 vol% to 40 vol%, and more specifically 25 vol% to 35 vol%. In a case in which the above range is satisfied, since electrolyte solution impregnation is excellent, life characteristics and output characteristics may be improved and it may be excellent in terms of energy density.

The porosity may be determined according to Equation 3 below by measuring apparent density of the electrode material mixture film and using actual density calculated based on the actual density and composition of each component.

$$\text{Porosity (\%)} = [1 - \{(\text{apparent density})/(\text{actual density})\}] \times 100 \qquad \text{[Equation 1]}$$

## Method of Preparing Dry Electrode

In another aspect, a method of preparing an electrode material mixture film is characterized by including the steps of: preparing an electrode material mixture composition by mixing an electrode active material, a conductive agent, and a binder mixture including a large-crystal binder having a crystal size of 50 nm or more in the binder and a small-crystal binder having a crystal size of less than 50 nm in the binder (S1); obtaining a mixed aggregate by kneading the electrode material mixture composition while applying a shear force (S2); obtaining powder for an electrode by grinding the mixed aggregate (S3); and preparing an electrode material mixture film by roll-pressing the powder for an electrode to form a sheet (S4).

Since the description of the electrode active material, the conductive agent, and the binder, particularly the binder mixture and the binder capable of forming a matrix, is the same as described above, a detailed description thereof will be omitted, and a preparation process for each step will be described below.

### Step S1

In the method of preparing a dry electrode, step S1 is a step of preparing an electrode material mixture composition by mixing an electrode active material, a conductive agent, and a binder mixture including a large-crystal binder having a crystal size of 50 nm or more in the binder and a small-crystal binder having a crystal size of less than 50 nm in the binder.

In this case, the mixing is performed such that the electrode active material, the conductive agent, and the binder mixture may be uniformly distributed, wherein, since they are mixed in a powder form, they may be mixed by various methods without limitation as long as they may be simply mixed. However, since the electrode in the present invention is prepared as a dry electrode that does not use a solvent, the mixing may be performed as dry mixing and may be performed by adding the above materials to a device such as a mixer or a blender.

In this case, the mixing may be performed in a mixer at 300 rpm to 10,000 rpm for 1 minute to 60 minutes, may preferably be performed at 400 rpm or more, or 500 rpm or more, and may also be performed at 9,000 rpm or less, 7,000 rpm or less, 5,000 rpm or less, 4,000 rpm or less, or 3,000 rpm or less. Also, the mixing time may be 2 minutes or more or 3 minutes or more, and the mixing may also be performed for 50 minutes or less, 40 minutes or less or 30 minutes or less. In a case in which the mixing is performed within the above range, since the materials may be uniformly mixed, battery performance may be improved. More specifically, the mixing speed may be 5,500 rpm or more, 6,000 rpm or more, or 6,500 rpm or more, and 14,000 rpm or less, 13,000 rpm or less, or 12,000 rpm or less may also be used.

Control conditions of the mixing process may determine how uniformly the binder is fibrillized in the subsequent kneading process of step S2, and since a non-uniform portion may occur within the entire film even if fibrillization occurs uniformly when the mixing is not uniform, it may be desirable to perform the mixing process under the conditions as described above.

### Step S2

In the method of preparing a dry electrode, step S2 includes forming a mixed aggregate by applying a shear force to the material mixture composition that is obtained in the mixing of step S1. That is, step S2 may be a fibrillization process of the binder mixture using the binder capable of forming a matrix.

The fibrillization process, for example, may be performed through mechanical milling or kneading, and is not particularly limited as long as it is generally performed, but preferably, it may be performed by high-temperature, low-shear kneading, and for example, may be performed using a kneading machine, such as a kneader, for example, a twin-screw extruder. Since the fibrillizable binder bonds and connects electrode active material and conductive agent powders while being fibrillized by the kneading, a mixed aggregate with a solid content of 100% may be formed.

The kneading may be performed at a speed of 10 rpm to 100 rpm, and may preferably be performed at a speed of 20 rpm to 70 rpm. Also, the kneading time ($t_K$) may be in a range of 10 minutes to 30 minutes, and may preferably be in a range of 15 minutes to 25 minutes or 17 minutes to 25 minutes. In a case in which the above range is satisfied, appropriate fibrillization may occur, and a structurally stable matrix may be formed while being uniformly fibrillized throughout.

Furthermore, the kneading may be performed at high temperatures and at a pressure above atmospheric pressure, and may specifically be performed at a pressure above atmospheric pressure.

More specifically, the kneading may be performed at a temperature of 50°C to 230°C, preferably, 90°C to 200°C. In a case in which the kneading is performed at a high temperature within the above range, the fibrillization of the binder and the aggregation due to the kneading may be well achieved, and a problem of disconnection of the fibrillized binder may be appropriately prevented.

Also, the kneading may be performed at a pressure above atmospheric pressure, specifically at a pressure of 1 atm to 3 atm, and more specifically at a pressure of 1.1 atm to 3 atm. When it is performed within the above range, the problem of the disconnection of the fibrillized binder may be appropriately prevented and a problem of excessive increase in density of the aggregate may be prevented.

That is, when a high-temperature, low-shear kneading process is performed at high temperatures and at a pressure above atmospheric pressure instead of high-shear kneading, an effect intended by the present invention may be achieved.

In an aspect, it may be desirable to control the method of preparing a dry electrode such that T defined by Equation 2 below is 5.5 minutes or less.

$$[\text{Equation 2}]$$

$$T = \{[C_L \times (1+W_L)] / [(C_S \times (1+W_S)]\} / t_K$$

In Equation 1, $C_L$ and $C_S$ are values of the crystal sizes of the large-crystal binder and the small-crystal binder, respectively, in units of nm, $W_L$ and $W_S$ are the weight fractions of the large-crystal binder and the small-crystal binder, respectively, based on a total weight of the binder mixture, and $t_K$ is the kneading time, a unitless value expressed in minutes.

As a ratio of the above-described R value to the $t_K$ value as the kneading time, T may be 5.7 minutes or less, 5.6 minutes or less, 5.5 minutes or less, or 5.4 minutes or less, wherein it may denote fibrillization time required depending on the binder mixture, by reflecting the influence of the crystal size and weight fraction of the binder being mixed during general mixing time.

Accordingly, in a case in which the T value is controlled to satisfy the above range, for example, in a case in which the R value is relatively large, the kneading time may be controlled to be long, and in a case in which the R value is relatively small, the kneading time may be controlled to be short, wherein since the R value may be controlled by determining the crystal size and the mixing ratio, it may be a method capable of preparing an electrode material mixture film having excellent characteristics.

*Step S3*

In the method of preparing a dry electrode, step S3 is a step of obtaining powder for an electrode by grinding the mixed aggregate prepared through the kneading step.

The mixed aggregate prepared through the kneading may also be directly pressed to form a sheet (sheeting, for example, calendering process), but, in this case, the mixed aggregate must be prepared in a form of a thin film by pressing it at high pressure and high temperature, and accordingly, a problem may occur in which density of the film may be excessively increased or a uniform film may not be obtained. Thus, the mixed aggregate prepared as described above is ground to prepare powder for an electrode.

A device used for the grinding is not particularly limited, but the grinding may preferably be performed using a device such as a blender or grinder.

The grinding may be performed at a speed of 1,000 rpm to 15,000 rpm for 5 seconds to 30 minutes, preferably, at a speed of 3,000 rpm to 8,000 rpm for 30 seconds to 15 minutes. In a case in which the grinding is performed within the above range, sufficient grinding may be achieved to prepare powder of an appropriate size for film formation, and a large amount of fine powder may not be generated in the aggregate.

With respect to the above-described grinding process, it serves to assist in the subsequent sheet-forming process such that a freestanding film may be appropriately formed, and at the same time, all factors affecting a conductive path connectivity index (CPCI) may be affected depending on its degree. Thus, it may be desirable to control the process so as to satisfy the conditions described above.

An average particle diameter of the powder for an electrode may be in a range of 10 $\mu$m to 3,000 $\mu$m, specifically 50 $\mu$m to 1,500 $\mu$m, and more specifically 100 $\mu$m to 700 $\mu$m. In a case in which the above range is satisfied, an electrode material mixture film having uniform thickness and density may be formed, and excellent physical properties of the electrode material mixture film may be secured.

Although it is not essential, the powder for an electrode may additionally include fillers to suppress expansion of the electrode. The filler is not particularly limited as long as it is a fibrous material that does not cause chemical changes in the battery, but, for example, the filler may include at least one selected from olefin-based polymers such as polyethylene and polypropylene; and fibrous materials such as glass fibers and carbon fibers.

*Step S4*

In the method of preparing a dry electrode, step S4 is a step of preparing an electrode material mixture film by hot-pressing the powder for an electrode through roll-pressing.

Step S4 may be a process for preparing an electrode material mixture film in the form of a free-standing sheet by hot-pressing the powder for an electrode obtained as described above using rolling rolls in a roll-to-roll process (calendering process, sheeting process) including two or more pairs of the rolling rolls.

The roll-to-roll process (calendering process) may include a roll press unit, wherein the roll press unit may include a pair of rolling rolls arranged to face each other, or may include three or more rolls arranged in contact with each other, and a plurality of rolling rolls may be arranged continuously in the roll press unit. In a case in which the plurality of rolling rolls are arranged continuously, temperature of each rolling roll and a nip speed ratio (rotational speed ratio of the pair of rolls) may be the same or different.

According to an embodiment of the present invention, step S4 may include the steps of: obtaining a powder-sheeting film by pre-sheeting the powder for an electrode (S4a); and preparing an electrode material mixture film by sheeting the powder-sheeting film two or more times (S4b). That is, after converting the powder into the form of a sheet in step S4a, the sheet may be rolled to improve strength and satisfy porosity and loading amount, which are required in the electrode, through step S4b.

Particularly, as temperature (T) of the rolling roll into which the powder for an electrode is first introduced, the temperature of the rolling roll through which the powder-sheeting film is prepared in step S4a may be important, wherein, in this case, the temperature of the rolling roll may be in a range of 30°C to 150°C, may preferably be 40°C or higher, 50°C or higher, 60°C or higher, or 70°C or higher, and may also be 140°C or less, 130°C or less, 120°C or less, 110°C or less, or 100°C, and in a case in which the above range is satisfied, the powders for an electrode containing the fibrillized binder during kneading may be more organically connected to each other while being formed into a sheet, and accordingly, an overall binder matrix structure may be formed robustly and uniformly.

A rotational speed ratio of the calender rolls provided in the roll-to-roll process of step S4 may be appropriately adjusted independently within a range of 1:1 to 1:10. Also, in order to adjust the prepared electrode material mixture film to have an appropriate thickness, the above-prepared electrode material mixture film may be introduced into the roll press unit again and hot-pressed 1 to 10 times.

**Dry Electrode**

In another aspect, a dry electrode is prepared according to the above-described method of preparing a dry electrode. For example, the dry electrode may include a current collector; and the electrode material mixture film of the present invention formed on the current collector.

Also, the dry electrode may be prepared by laminating and disposing the electrode material mixture film prepared according to the above method on one side or both sides of the current collector through a lamination process immediately following step S4.

The lamination may be a step of attaching the electrode material mixture film onto the current collector by rolling. The lamination may be performed by a roll press method using a lamination roller, and in this case, the lamination roller may be maintained at a temperature of 20°C to 200°C.

In a case in which the dry electrode is a positive electrode, the current collector is not particularly limited so long as it has conductivity without causing chemical changes in the battery. For example, stainless steel, aluminum, nickel, titanium, fired carbon, or aluminum or stainless steel that is surface-treated with one of carbon, nickel, titanium, silver, or the like may be used as the current collector.

In a case in which the dry electrode is a negative electrode, the current collector is not particularly limited so long as it has high conductivity without causing changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.

A thickness of the current collector may be in a range of 3 $\mu$m to 100 $\mu$m, may preferably be in a range of 8 $\mu$m to 80

μm, and is not limited thereto. Also, the current collector may have fine surface roughness to improve the adhesion with the material mixture film.

The current collector, which is coated entirely or partially with a conductive primer for reducing resistance and improving adhesion on a surface thereof, may be used. Herein, the conductive primer may include a conductive material and a binder, wherein the conductive material is not limited as long as it is a material having conductivity, but, for example, may be a carbon-based material. The binder may include a fluorine-based binder (including PVDF and PVDF copolymer), an acrylic-based binder, and a water-based binder which may be dissolved in a solvent.

## Secondary Battery

In another aspect, a secondary battery includes the above-described dry electrode. The dry electrode may be prepared by the above-described method of preparing a dry electrode. For example, it may be prepared by mixing two types of binders having different crystallite sizes.

The secondary battery may be an all-solid-state secondary battery or a non-aqueous electrolyte secondary battery. The all-solid-state secondary battery may have a structure in which a positive electrode, a solid electrolyte membrane, and a negative electrode are stacked, and the non-aqueous electrolyte secondary battery may have a structure in which a positive electrode, a separator, and a negative electrode are stacked, and may be impregnated with a non-aqueous electrolyte.

Preferably, the electrode may be a dry positive electrode, and specifically, it may be a secondary battery including the dry positive electrode according to the present invention and a negative electrode, wherein a separator or a solid electrolyte membrane is disposed between the electrodes. In a case in which only one of the positive electrode or the negative electrode is the above-described dry electrode, the other electrode may be an electrode that is prepared through a conventional wet preparation method.

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the secondary battery, but the present invention is not limited thereto. For example, the inorganic electrolyte may be a sulfide-based solid electrolyte and/or an oxide-based solid electrolyte.

Specifically, in a case in which the electrolyte is a liquid electrolyte, the electrolyte may include an organic solvent and a lithium salt. Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

Also, since the secondary battery stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another aspect, a battery box including the secondary battery as a unit cell is provided. The battery box may be a battery module or a battery pack.

The battery box may be used as a power source of at least one medium and large sized device of a power tool; electric cars including an electric vehicle (EV), a hybrid electric vehicle, and a plug-in hybrid electric vehicle (PHEV); or a power storage system.

## Examples

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## Example 1

After 96 g of $LiNi_{0.81}Co_{0.05}Mn_{0.12}Al_{0.02}O_2$ as a positive electrode active material, 1 g of carbon black as a conductive agent, and 3 g of a binder mixture in which polytetrafluoroethylene (PTFE) having a crystal size of 50 nm and PTFE having a crystal size of 39 nm were mixed in a weight ratio of 1:9, as a binder, were introduced into a blender and mixed at 10,000 rpm for 1 minute to prepare a material mixture, the material mixture was put in a kneader and kneaded at a rotational speed of 40 rpm for 17 minutes at a temperature of 150°C and a pressure of 1.1 atm to prepare an aggregate, and the aggregate was ground to prepare powder for an electrode.

Thereafter, temperature of a roll into which the powder for an electrode was introduced in the roll-to-roll process was set to 100°C, the powder for an electrode was powder-sheeted, and, after being sheeted twice, the sheeted powder for an electrode was laminated with an aluminum foil to prepare a dry electrode in which an electrode material mixture film was disposed on an aluminum current collector.

## Example 2

A dry electrode was prepared in the same manner as in Example 1 except that a mixture, in which polytetrafluoroethylene (PTFE) having a crystal size of 50 nm and PTFE having a crystal size of 39 nm were mixed in a weight ratio of 3:7, was used as a binder mixture, and the material mixture was put in a kneader and kneaded for 19 minutes to prepare an aggregate.

## Example 3

A dry electrode was prepared in the same manner as in Example 1 except that a mixture, in which polytetrafluoroethylene (PTFE) having a crystal size of 65 nm and PTFE having a crystal size of 35 nm were mixed in a weight ratio of 1:9, was used as a binder mixture, and the material mixture was put in a kneader and kneaded for 25 minutes to prepare an aggregate.

## Example 4

A dry electrode was prepared in the same manner as in Example 1 except that a mixture, in which polytetrafluoroethylene (PTFE) having a crystal size of 75 nm and PTFE having a crystal size of 49 nm were mixed in a weight ratio of 3:7, was used as a binder mixture, and the material mixture was put in a kneader and kneaded for 24 minutes to prepare an aggregate.

**Example 5**

A dry electrode was prepared in the same manner as in Example 1 except that a mixture, in which polytetrafluoroethylene (PTFE) having a crystal size of 55 nm and PTFE having a crystal size of 45 nm were mixed in a weight ratio of 4:6, was used as a binder mixture, and the material mixture was put in a kneader and kneaded for 20 minutes to prepare an aggregate.

**Comparative Example 1**

A dry electrode was prepared in the same manner as in Example 1 except that polytetrafluoroethylene (PTFE) having a crystal size of 50 nm was used instead of the binder mixture, and the material mixture was put in a kneader and kneaded for 25 minutes to prepare an aggregate.

**Comparative Example 2**

A dry electrode was prepared in the same manner as in Example 1 except that polytetrafluoroethylene (PTFE) having a crystal size of 50 nm was used instead of the binder mixture, and the material mixture was put in a kneader and kneaded for 17 minutes to prepare an aggregate.

**Comparative Example 3**

A dry electrode was prepared in the same manner as in Example 1 except that polytetrafluoroethylene (PTFE) having a crystal size of 39 nm was used instead of the binder mixture, and the material mixture was put in a kneader and kneaded for 25 minutes to prepare an aggregate.

**Comparative Example 4**

A dry electrode was prepared in the same manner as in Example 1 except that polytetrafluoroethylene (PTFE) having a crystal size of 39 nm was used instead of the binder mixture, and the material mixture was put in a kneader and kneaded for 17 minutes to prepare an aggregate.

**Comparative Example 5**

A dry electrode was prepared in the same manner as in Example 1 except that a mixture, in which polytetrafluoroethylene (PTFE) having a crystal size of 70 nm and PTFE having a crystal size of 50 nm were mixed in a weight ratio of 5:5, was used as a binder mixture, and the material mixture was put in a kneader and kneaded for 25 minutes to prepare an aggregate.

**Comparative Example 6**

A dry electrode was prepared in the same manner as in Example 1 except that a mixture, in which polytetrafluoroethylene (PTFE) having a crystal size of 39 nm and PTFE having a crystal size of 25 nm were mixed in a weight ratio of 5:5, was used as a binder mixture, and the material mixture was put in a kneader and kneaded for 25 minutes to prepare an aggregate.

**Experimental Example 1: Measurement of Physical Properties of Powder-Sheeting Films**

Average peel strength and a standard deviation of the peel strengths of the powder-sheeting films formed during the preparation of the examples and the comparative examples were measured using the following methods.

1) Tensile Strength (MPa) and Elongation (%): After cutting the powder-sheeting film into a size of 50 mm (MD) x 10 mm (TD), in the MD direction of the powder-sheeting film, tensile strength was measured using UTM equipment (ZwickRoell AG) according to the ASTM 638 method, wherein the measurement was performed under conditions of a pre-load of 0.01 kg/cm and a speed of 50 mm/min. In this case, the tensile strength (MPa) was obtained as the maximum value of a force applied until the sample did not fracture, and elongation (%) was obtained as a ratio of a length of the sample to an initial length until fracture occurred (percentage of a ratio of the length just before fracture to the initial length).

[Table 1]

| | BB crystal size ($C_L$) | BB weight fraction ($W_L$) | SB crystal size ($C_S$) | SB weight fraction ($W_S$) | R | Kneading time ($t_K$, min) | R/$t_K$ | Tensile strength (MPa) | Elongation (%) |
|---|---|---|---|---|---|---|---|---|---|
| Example 1 | 50 | 0.1 | 39 | 0.9 | 0.74 | 17 | 4.37 | 0.512 | 4.15 |
| Example 2 | 50 | 0.3 | 39 | 0.7 | 0.98 | 19 | 5.16 | 0.525 | 4.02 |
| Example 3 | 65 | 0.1 | 35 | 0.9 | 1.08 | 25 | 4.30 | 0.518 | 3.88 |
| Example 4 | 75 | 0.3 | 49 | 0.7 | 1.17 | 24 | 4.88 | 0.498 | 3.98 |
| Example 5 | 55 | 0.4 | 45 | 0.6 | 1.07 | 20 | 5.35 | 0.530 | 4.28 |
| Comparative Example 1 | 50 | 1 | - | - | - | 25 | - | 0.632 | 2.30 |
| Comparative Example 2 | 50 | 1 | - | - | - | 17 | - | 0.432 | 2.00 |
| Comparative Example 3 | - | - | 39 | 1 | - | 25 | - | 0.352 | 2.21 |
| Comparative Example 4 | - | - | 39 | 1 | - | 17 | - | 0.380 | 4.20 |
| Comparative Example 5 | 70 | 0.5 | 50 | 0.5 | 1.4 | 17 | 8.24 | 0.554 | 2.12 |
| Comparative Example 6 | 39 | 0.5 | 25 | 0.5 | 1.56 | 17 | 9.18 | 0.351 | 1.95 |
| BB: Large-crystal binder, SB: Small-crystal binder | | | | | | | | | |

Referring to Table 1, with respect to Examples 1 to 5, as a result of using the mixture of the binders having different crystal sizes and satisfying a specific range of sizes, it may be confirmed that since tensile strengths were high and elongations were also high, they had characteristics of being flexible and not easily broken. However, with respect to Comparative Examples 1 to 6, it may be understood that since elongations were low overall, flexibility was poor, and accordingly, it may be expected that processability in a calendering process was poor due to a decrease in bending resistance, and with respect to Comparative Example 4 which was evaluated to have excellent elongation, it may also be expected that since the tensile strength was low, it was highly likely to break when a certain amount of tension was applied.

**Experimental Example 2: Battery Performance Evaluation**

**1) Preparation of Secondary Batteries:** Artificial graphite was used as a negative electrode active material. A negative electrode including a negative electrode active material layer, which included the negative electrode active material, CMC and SBR as negative electrode binders, and carbon black, as a negative electrode conductive agent, in a weight ratio of 96.7:2.8:0.5, was prepared. A weight loading amount of the negative electrode active material layer was 277 mg/25 cm$^2$, a thickness was 67 $\mu$m, and a copper foil having a thickness of 10 $\mu$m was used as a negative electrode collector.

Each of the dry positive electrodes of the examples and the comparative examples, the negative electrode, and a porous polyethylene separator were assembled using a winding method, and an electrolyte solution (ethylene carbonate (EC)/ethyl methyl carbonate (EMC) = 3/7 (volume ratio), lithium hexafluorophosphate (LiPF$_6$ 1 mol)) was injected into the assembled battery to prepare a secondary battery.

The secondary battery was charged at a C-rate of 0.1 C to 3.6 V and then discharged to 2.5 V to perform a formation process.

**2) Battery Resistance (m$\Omega$):** After charging and discharging the secondary battery, while the secondary battery was fully charged and then discharged again, a 2.5C pulse current was applied for a specific time according to a change in state of charge (SOC) to measure surface resistance (0.1 second resistance).

**3) Resistance Increase Rate (%) and Capacity Retention (%):** After charging of the secondary battery at 0.2C to 3.6 V in a constant current-constant voltage (CCCV) mode (end current 1/20C) and then discharging of the secondary battery at a constant current of 0.2C to 2.5 V were set as one cycle to perform initial charge and discharge, while 100 cycles of the charging and discharging were performed, cell resistance and discharge capacity were measured to calculate a resistance increase rate and a capacity retention using equations below.

Capacity retention (%) = (discharge capacity after 100 cycles)/(discharge capacity after 1 cycle) × 100 Resistance increase rate (%) = [{ (discharge resistance after 100 cycles)/(discharge resistance after 1 cycle)} - 1] × 100

[Table 2]

|  | Resistance increase rate (%) | Capacity retention (%) |
|---|---|---|
| Example 1 | 2.35 | 99.5 |
| Example 2 | 2.50 | 98.9 |
| Example 3 | 2.12 | 99.1 |
| Example 4 | 2.45 | 99.1 |
| Example 5 | 2.56 | 99.3 |
| Comparative Example 1 | 4.50 | 96.3 |
| Comparative Example 2 | 4.15 | 97.7 |
| Comparative Example 3 | 4.39 | 97.5 |
| Comparative Example 4 | 4.15 | 96.8 |
| Comparative Example 5 | 3.98 | 98.1 |
| Comparative Example 6 | 3.85 | 97.5 |

Referring to Table 2, it may be confirmed that the secondary batteries using the dry electrodes of Examples 1 to 5 were evaluated to have excellent resistance increase rates and capacity retentions. However, with respect to the secondary batteries of Comparative Examples 1 to 6, it may be confirmed that an increase in resistance according to cycle operation was about twice as large as that of the examples, and a capacity drop occurred even though the cycle number was as low as 100 cycles.

## Claims

1. An electrode material mixture composition comprising:

    a binder mixture including a large-crystal binder having a crystal size of 50 nm or more and a small-crystal binder having a crystal size of less than 50 nm; and
    an electrode active material.

2. The electrode material mixture composition of claim 1, wherein a weight fraction of the large-crystal binder in the binder mixture is smaller than a weight fraction of the small-crystal binder.

3. The electrode material mixture composition of claim 1, wherein the large-crystal binder has a crystal size of 50 nm to 100 nm, and the small-crystal binder has a crystal size of 10 nm to 49 nm.

4. The electrode material mixture composition of claim 1, wherein based on 100 parts by weight of the binder mixture,

    5 parts by weight to 45 parts by weight of the large-crystal binder and
    55 parts by weight to 95 parts by weight of the small-crystal binder are included.

5. The electrode material mixture composition of claim 1, wherein the binder mixture has an R defined by Equation 1 of 1.27 or less:

[Equation 1]

$$R = [C_L \times (1+W_L)] / [(C_S \times (1+W_S)]$$

wherein, in Equation 1, $C_L$ and $C_S$ are values of the crystal sizes of the large-crystal binder and the small-crystal binder, respectively, in units of nm, and $W_L$ and $W_S$ are weight fractions of the large-crystal binder and the small-crystal binder, respectively, based on a total weight of the binder mixture.

6. The electrode material mixture composition of claim 1, wherein the electrode active material comprises a lithium transition metal compound containing at least one selected from the group consisting of nickel (Ni), cobalt (Co), manganese (Mn), and iron (Fe).

7. The electrode material mixture composition of claim 1, wherein the binder comprises polytetrafluoroethylene (PTFE).

8. A method of preparing a dry electrode, the method comprising the steps of:

preparing an electrode material mixture composition by mixing an electrode active material, a conductive agent, and a binder mixture including a large-crystal binder having a crystal size of 50 nm or more in the binder and a small-crystal binder having a crystal size of less than 50 nm in the binder (S1);
obtaining a mixed aggregate by kneading the electrode material mixture composition while applying a shear force (S2);
obtaining powder for an electrode by grinding the mixed aggregate (S3); and
preparing an electrode material mixture film by roll-pressing the powder for an electrode to form a sheet (S4).

9. The method of preparing a dry electrode of claim 8, wherein T defined by Equation 2 is 5.7 minutes or less:

[Equation 2]

$$T = \{[C_L \times (1+W_L)] / [(C_S \times (1+W_S)]\} / t_K$$

wherein, in Equation 1, $C_L$ and $C_S$ are values of the crystal sizes of the large-crystal binder and the small-crystal binder, respectively, in units of nm, $W_L$ and $W_S$ are weight fractions of the large-crystal binder and the small-crystal binder, respectively, based on a total weight of the binder mixture, and $t_K$ is kneading time, a unitless value expressed in minutes.

10. The method of preparing a dry electrode of claim 9, wherein $t_K$ is in a range of 15 minutes to 25 minutes.

11. The method of preparing a dry electrode of claim 8, wherein temperature of a roll in step S4 is in a range of 60°C to 150°C.

12. The method of preparing a dry electrode of claim 8, wherein step S4 comprises the steps of: obtaining a powder-sheeting film by pre-sheeting the powder for an electrode (S4a); and preparing an electrode material mixture film by sheeting the powder-sheeting film two or more times (S4b).

13. A secondary battery comprising an electrode that is prepared by the method of preparing a dry electrode of claim 8.

TRANSLATION

## INTERNATIONAL SEARCH REPORT

| International application No. |
|---|
| **PCT/KR2025/011990** |

| A. | CLASSIFICATION OF SUBJECT MATTER |
|---|---|
| | **H01M 4/62**(2006.01)i; **H01M 4/525**(2010.01)i; **H01M 4/505**(2010.01)i; **H01M 4/1391**(2010.01)i; **H01M 10/052**(2010.01)i |

According to International Patent Classification (IPC) or to both national classification and IPC

| B. | FIELDS SEARCHED |
|---|---|

Minimum documentation searched (classification system followed by classification symbols)

H01M 4/62(2006.01); C01B 32/159(2017.01); C01B 32/168(2017.01); C08J 3/12(2006.01); H01M 10/052(2010.01); H01M 10/0525(2010.01); H01M 4/13(2010.01); H01M 4/1393(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 전극합재 조성물(electrode mixture composition), 바인더(binder), 결정 크기 (crystal size), 건식 전극(dry electrode), 섬유화(fibrillation), 균일성(uniformity)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0125000 A (DAIKIN INDUSTRIES, LTD. et al.) 28 August 2023 (2023-08-28) <br> claims 1, 10; paragraphs [0134], [0166]-[0170], [0180] | 1-13 |
| A | JP 7451754 B2 (LG ENERGY SOLUTION LTD.) 18 March 2024 (2024-03-18) <br> abstract; claims 1-15 | 1-13 |
| A | KR 10-2020-0138263 A (MAXWELL TECHNOLOGIES, INC.) 09 December 2020 (2020-12-09) <br> abstract; claims 1-18 | 1-13 |
| A | KR 10-2016-0146580 A (LG CHEM, LTD.) 21 December 2016 (2016-12-21) <br> abstract; claims 1-22 | 1-13 |
| A | KR 10-2024-0037671 A (LG ENERGY SOLUTION, LTD. et al.) 22 March 2024 (2024-03-22) <br> abstract; claims 1-14 | 1-13 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **06 November 2025** | **06 November 2025** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/011990**

| Patent document cited in search report | | | Publication date (day/month/year) | Patent family member(s) | | | Publication date (day/month/year) |
|---|---|---|---|---|---|---|---|
| KR | 10-2023-0125000 | A | 28 August 2023 | CN | 116568639 | A | 08 August 2023 |
| | | | | EP | 4269361 | A1 | 01 November 2023 |
| | | | | EP | 4269361 | A4 | 07 May 2025 |
| | | | | JP | 2022-103140 | A | 07 July 2022 |
| | | | | JP | 7350049 | B2 | 25 September 2023 |
| | | | | US | 2023-0378471 | A1 | 23 November 2023 |
| | | | | WO | 2022-138940 | A1 | 30 June 2022 |
| JP | 7451754 | B2 | 18 March 2024 | CN | 116349023 | A | 27 June 2023 |
| | | | | EP | 4113654 | A1 | 04 January 2023 |
| | | | | EP | 4113654 | A4 | 13 November 2024 |
| | | | | JP | 2023-518497 | A | 01 May 2023 |
| | | | | KR | 10-2024-0122406 | A | 12 August 2024 |
| | | | | US | 2023-0133395 | A1 | 04 May 2023 |
| | | | | WO | 2022-086103 | A1 | 28 April 2022 |
| KR | 10-2020-0138263 | A | 09 December 2020 | CN | 111919315 | A | 10 November 2020 |
| | | | | CN | 111919315 | B | 30 January 2024 |
| | | | | CN | 117855484 | A | 09 April 2024 |
| | | | | EP | 3776696 | A1 | 17 February 2021 |
| | | | | JP | 2021-519495 | A | 10 August 2021 |
| | | | | JP | 2024-037911 | A | 19 March 2024 |
| | | | | JP | 7474703 | B2 | 25 April 2024 |
| | | | | KR | 10-2025-0142944 | A | 30 September 2025 |
| | | | | KR | 10-2865609 | B1 | 30 September 2025 |
| | | | | US | 11545666 | B2 | 03 January 2023 |
| | | | | US | 11811066 | B2 | 07 November 2023 |
| | | | | US | 2019-0305316 | A1 | 03 October 2019 |
| | | | | US | 2023-0075404 | A1 | 09 March 2023 |
| | | | | US | 2024-0154128 | A1 | 09 May 2024 |
| | | | | WO | 2019-191397 | A1 | 03 October 2019 |
| KR | 10-2016-0146580 | A | 21 December 2016 | CN | 107580732 | A | 12 January 2018 |
| | | | | CN | 107580732 | B | 27 October 2020 |
| | | | | EP | 3309879 | A1 | 18 April 2018 |
| | | | | EP | 3309879 | A4 | 02 May 2018 |
| | | | | EP | 3309879 | B1 | 03 October 2018 |
| | | | | JP | 2018-523281 | A | 16 August 2018 |
| | | | | JP | 6732294 | B2 | 29 July 2020 |
| | | | | KR | 10-1937897 | B1 | 14 January 2019 |
| | | | | US | 10476081 | B2 | 12 November 2019 |
| | | | | US | 2018-0159131 | A1 | 07 June 2018 |
| KR | 10-2024-0037671 | A | 22 March 2024 | CN | 118743061 | A | 01 October 2024 |
| | | | | EP | 4432402 | A1 | 18 September 2024 |
| | | | | EP | 4432402 | A4 | 07 May 2025 |
| | | | | JP | 2025-503460 | A | 04 February 2025 |
| | | | | US | 2025-0062360 | A1 | 20 February 2025 |
| | | | | WO | 2024-058450 | A1 | 21 March 2024 |

Form PCT/ISA/210 (patent family annex) (July 2022)